# EUROPÄISCHE PATENTSCHRIFT

(11) **EP 1 188 087 B1**
(45) Veröffentlichungstag und Bekanntmachung des Hinweises auf die Patenterteilung: **02.01.2004**
(21) Anmeldenummer: 00926526.5
(22) Anmeldetag: 17.05.2000
(51) Int. Cl.: G02B 23/14, G01S 7/481

(54) **KOMBINIERTE FERNROHR- UND ENTFERNUNGSMESSVORRICHTUNG**
COMBINED TELESCOPE AND TELEMETER DEVICE
APPAREIL COMBINANT UNE LUNETTE ET UN TELEMETRE

(30) Priorität: 10.06.1999 AT 991030
(43) Veröffentlichungstag der Anmeldung: 20.03.2002
(73) Patentinhaber: Perger, Andreas, 1120 Wien (AT)
(72) Erfinder: Perger, Andreas, 1120 Wien (AT)
(74) Vertreter: Weiser, Andreas, Dr.
(86) Internationale Anmeldenummer: PCT/AT2000/000136
(87) Internationale Veröffentlichungsnummer: WO 2000/077554

(56) Entgegenhaltungen:
- EP-A- 0 709 705
- DE-A- 2 656 673
- DE-A- 2 924 478
- GB-A- 2 187 353
- US-A- 4 611 911
- PATENT ABSTRACTS OF JAPAN vol. 007, no. 206 (P-222), 10. September 1983 (1983-09-10) & JP 58 102108 A (MITSUBISHI DENKI KK), 17. Juni 1983 (1983-06-17)

## Beschreibung

Die vorliegende Erfindung betrifft eine kombinierte Fernrohrund Entfernungsmeßvorrichtung, umfassend
ein Zielfernrohr mit einem Fernrohrgehäuse, dessen eines Ende ein Objektiv und dessen anderes Ende ein Okular aufnimmt und das zwischen diesen einen Strahlengang definiert,
einen optoelektronischen Entfernungsmesser mit einer Sendeempfangsoptik für optische Meßstrahlen und einer Auswerteelektronik zur Laufzeitmessung zwischen einem gesendeten und einem empfangenen Maßstrahl und zur darausfolgenden Entfernungsbestimmung, und
einen Strahlteiler im Strahlengang des Fernrohrgehäuses, welcher Meßstrahlen in den zum Objektiv verlaufenden Teil des Strahlenganges ein- bzw. auskoppelt,
wobei das Fernrohrgehäuse mit einer Öffnung in einer Seitenwand versehen ist, und
der Entfernungsmesser in einem gesonderten, an die genannte Seitenwand anbaubaren Meßgehäuse enthalten ist, wobei die Sendeempfangsoptik auf die genannte Öffnung gerichtet ist.

Die Erfindung betrifft weiters ein Zielfernrohr für den Anbau eines optoelektronischen Entfernungsmessers, umfassend
ein Fernrohrgehäuse, dessen eines Ende ein Objektiv und dessen anderes Ende ein Okular aufnimmt und das zwischen diesen einen Strahlengang definiert,
einen Strahlteiler im Strahlengang des Fernrohrgehäuses, welcher Meßstrahlen für den optoelektronischen Entfernungsmesser in den zum Objektiv verlaufenden Teil des Strahlenganges ein- bzw. auskoppelt,
wobei das Fernrohrgehäuse mit einer Öffnung in einer Seitenwand für den Durchtritt dieser Meßstrahlen versehen ist.

Eine Vorrichtung der eingangs genannten Art, allerdings in Form eines Periskops, ist aus der DE-A-265 66 73 bekannt.

Die Erfindung befaßt sich insbesondere mit dem Anbau einer Entfernungsmeßvorrichtung an ein Zielfernrohr, bei welchem das Fernrohrgehäuse in an sich bekannter Weise (z.B. EP 0 709 705) ein einstellbar beweglich gelagertes Innenrohr aufweist, welches vom Strahlengang durchsetzt ist, eine Zielmarke darbietet und gegebenenfalls eine Umkehroptik enthält. Hier ergibt sich das Problem, daß bei der Absehensverstellung, bei welcher das Innenrohr gegenüber dem Fernrohrgehäuse verkippt wird, der Fokus des in den Strahlengang eingekoppelten Meßstrahles sich gegenüber der Zielmarke verschiebt, was zu Meßfehlern führt.

Die Erfindung setzt sich zum Ziel, eine kombinierte Fernrohr- und Entfernungsmeßvorrichtung bzw. ein Zielfernrohr zu schaffen, bei welchen durch die Absehensverstellung bedingte Meßfehler weitgehend vermieden werden.

Dieses Ziel wird in einem ersten Aspekt bei einer Vorrichtung der einleitend genannten Art erfindungsgemäß dadurch erreicht,
daß das Fernrohrgehäuse in an sich bekannter Weise ein einstellbar beweglich gelagertes Innenrohr aufweist, welches vom Strahlengang durchsetzt ist und eine Zielmarke darbietet,
daß der Strahlteiler vom Innenrohr getragen ist, und
daß der zwischen Strahlteiler und Sendeempfangsoptik verlaufende Abschnitt der Meßstrahlen zumindest über einen Teil dieses Abschnittes afokal ist.

Dadurch kann sich das Innenrohr gegenüber dem Fernrohrgehäuse bewegen, ohne daß eine nennenswerte Verschiebung des Fokus des Meßstrahles eintritt. Die Entfernungsmessung ist damit weitgehend unempfindlich gegenüber der Absehensverstellung, so daß Meßfehler wesentlich reduziert werden.

Eine konstruktiv einfache und kompakte Art, dies zu erreichen, besteht erfindungsgemäß darin, daß das Fernrohrgehäuse einerseits und das Innenrohr oder der Strahlteiler anderseits je eine Linse oder Linsengruppe abstützen, welche zwischeneinander den genannten afokalen Teil bilden.

Gemäß einer bevorzugten Ausführungsform der Erfindung wird vorgesehen, daß die Öffnung mit einer für Meßstrahlen transparenten Abdeckung dicht verschlossen ist. Dadurch bleibt das Fernrohr vor einem Eintritt von Feuchtigkeit und der Gefahr eines Beschlagens geschützt. Selbst im Falle einer Reparatur des Entfernungsmessers bleibt das Fernrohr abgedichtet. Dabei kann bevorzugt die Abdeckung durch die vom Fernrohrgehäuse abgestützte Linse gebildet sein.

Besonders vorteilhaft ist es, wenn die Zielmarke auf der dem Objektiv zugewandten Seite des Strahlteilers, bevorzugt in Form einer Strichplatte, angeordnet ist. Dies stellt einen minimalen Eingriff in das Zielfernrohr dar.

In jedem Fall ist es besonders vorteilhaft, wenn die Sendeempfangsoptik voneinander örtlich beabstandete Sende- und Empfangsteile aufweist, denen ein Strahlsplitter zur entsprechenden Aufteilung von gesendeten und empfangenen Meßstrahlen vorgeordnet ist. Dadurch kann das Übersprechen vom Sende- zum Empfangsteil wesentlich verringert werden.

Besonders günstig ist es hiebei, wenn gemäß einem weiteren Merkmal der Erfindung der Strahlsplitter durch zwei voneinander abgewandte, mittig auf die genannte Öffnung ausgerichtete 90°-Umlenkprismen gebildet ist. Dies ermöglicht einen besonders flachen Aufbau des Meßgehäuses.

Alternativ kann der Strahlsplitter ein physikalischer Strahlleistungsteiler, z.B. 50%/50%-Teiler, polarisierender Teiler usw., sein, so daß sowohl der gesendete als auch der empfangene Meßstrahl jeweils die gesamte Fläche des Objektivs ausnützen können.

Ein besonders kompakter Aufbau des Meßgehäuses ergibt sich, wenn gemäß einem weiteren Merkmal der Erfindung der Sende- und der Empfangsteil auf einer sich parallel zur Achse des Fernrohrgehäuses erstreckenden Schaltkarte in Achsenrichtung voneinander beabstandet angeordnet sind.

Das Ziel der Erfindung wird in einem zweiten Aspekt mit einem Zielfernrohr gemäß den Ansprüchen 10 bis 12 erreicht; hinsichtlich dessen Vorteile wird auf die obigen Ausführungen verwiesen.

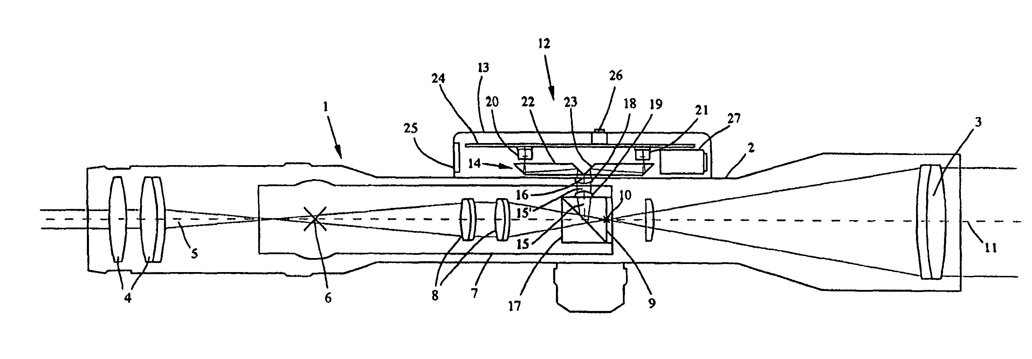

Die Erfindung wird nachstehend an Hand eines in der beigeschlossenen Zeichnung dargestellten Ausführungsbeispieles näher erläutert. Die Figur der Zeichnung zeigt eine kombinierte Fernrohr- und Entfernungsmeßvorrichtung der Erfindung schematisch im Horizontal-Längsschnitt.

Die kombinierte Fernrohr- und Entfernungsmeßvorrichtung umfaßt ein allgemein mit 1 bezeichnetes Zielfernrohr mit einem Fernrohrgehäuse 2, dessen eines Ende ein Objektiv 3 und dessen anderes Ende ein Okular 4 aufnimmt und das zwischen diesen einen Strahlengang 5 definiert.

Im Inneren des Fernrohrgehäuses 2 ist ein mit Hilfe nicht dargestellter Mittel um einen Drehpunkt 6 beweglich gelagertes Innenrohr 7 angeordnet. Das Innenrohr 7 enthält, wie in der Technik bekannt, ein nur schematisch dargestelltes Umkehrsystem 8 sowie eine Strichplatte 9 an seinem vorderen Ende, die eine Zielmarke 10 dem Betrachter am Okular 4 darbietet. Zur Absehensverstellung des Zielfernrohres, d.h. zur Justierung der Visierachse 11 gegenüber der Schußachse einer Schußwaffe (nicht dargestellt), wird das Innenrohr 7 in bekannter Weise mit Hilfe von Justierspindeln (nicht gezeigt) um den Drehpunkt 6 verschwenkt.

An die Außenseitenwand des Fernrohrgehäuses 2 ist ein allgemein mit 12 bezeichneter optoelektronischer Entfernungsmesser auf Laserbasis angebaut. Der Entfernungsmesser 12 ist in einem eigenen Meßgehäuse 13 aufgenommen. Das Meßgehäuse 13 enthält eine Sendeempfangsoptik 14 für Lasermeßstrahlen 15 und eine Auswerteelektronik zur Laufzeitmessung zwischen einem gesendeten und einem empfangenen Meßstrahl 15 und zur darausfolgenden Entfernungsbestimmung.

Die Sendeempfangsoptik 14 ist auf eine in der Seitenwand des Fernrohrgehäuses 2 ausgebildete Öffnung 16 ausgerichtet. Die Öffnung 16 liegt ihrerseits über dem Austrittsfenster eines im Innenrohr 7 angeordneten Strahlteilers 17 zur Ein- bzw. Auskopplung der Meßstrahlen 15 in den zum Objektiv 3 verlaufenden Teil des Strahlenganges 5.

Der Strahlteiler 17 liegt an der Rückseite der Strichplatte 9 an. Alternativ kann die Zielmarke 10 auch direkt auf der Vorderseite des Strahlteilers 17 ausgebildet sein.

Eine Bewegung des Innenrohres 7 gegenüber dem Fernrohrgehäuse 2 würde eine nachteilige Bewegung des am Ort der Zielmarke 10 auftretenden Fokus der Lasermeßstrahlen 15 hervorrufen. Der resultierende Fehler beim Anvisieren zur Messung wäre etwa gleich groß wie die Absehensverstellung, in der Regel 50-100 cm auf 100 m Distanz.

Um dies zu verhindern, werden die Meßstrahlen 15 in zumindest einem Teil 15' des zwischen der Empfangsoptik 14 und dem Strahlteiler 17 verlaufenden Abschnittes afokal geführt. Zu diesem Zweck sind am Fernrohrgehäuse 2 im Bereich der Öffnung 16 einerseits und am Innenrohr 7 oder direkt am Strahlteiler 17 anderseits je eine Linsengruppe oder Linse 18, 19 montiert, welche zwischeneinander den afokalen Teil 15' des genannten Meßstrahlabschnittes ausbilden. Dadurch wird (wenn die Strahlauskopplung seitlich erfolgt wie in der Figur gezeigt) der vertikale Fehler zur Gänze eliminiert, und der horizontale Fehler wird auf ca. 1/10 der Absehensverstellung reduziert, in der Regel ca. 5-10 cm auf 100 m. Dieser Restfehler ist für die Distanzmessung vernachlässigbar.

Die Sendeempfangsoptik 14 besteht im gezeigten Beispiel aus voneinander örtlich beabstandeten, getrennten Sende- und Empfangsteilen 20, 21, denen ein Strahlsplitter 22, 23 zur Aufteilung der Meßstrahlen 15 in gesendete und empfangene Meßstrahlen vorgeschaltet ist. Die Sende- und Empfangsteile 20, 21 sind auf einer sich parallel zur Achse des Fernrohrgehäuses 2 erstreckenden Schaltkarte 24 angeordnet, welche auch die Auswerteelektronik zur Laufzeitmessung und Entfernungsbestimmung trägt.

Der Strahlsplitter 22, 23 setzt sich aus zwei voneinander abgewandten, mittig auf die Öffnung 16 ausgerichteten Z-Umlenkprismen zusammen. Dadurch wird dem Sendeteil 20 und dem Empfangsteil 21 jeweils eine Hälfte der Öffnung des Objektivs 3 zugeordnet. Die Umlenkprismen 22, 23 ermöglichen einen großen Abstand zwischen Sendeteil 20 und Empfangsteil 21, was das Übersprechen vom Sendeteil auf den Empfangsteil gering hält. Außerdem ermöglicht die gezeigte Prismenanordnung eine flache Bauweise des Meßgehäuses 13 und die Anordnung der Auswerteelektronik in einer Ebene.

Das Meßgehäuse 13 trägt an seiner Rückseite ein Display 25 zur Anzeige der gemessenen Entfernung und an seiner Seite einen Taster 26 zur Auslösung der Messung. Im Meßgehäuse 13 ist ferner eine Batterie 27 zum Betrieb des Entfernungsmessers angeordnet.

Das Display 25 kann alternativ im Inneren des Fernrohrgehäuses 2 z.B. am Bildfeldrand in der zweiten Bildebene des Strahlenganges 5 angeordnet sein.

Anstelle des gezeigten geometrischen Strahlsplitters 22, 23 kann jede andere Art von bekanntem Strahlsplitter verwendet werden, z.B. ein physikalischer Strahlleistungsteiler, wie ein 50%/50%-Teiler, polarisierender Teiler usw. In diesem Fall sind dem Sendeteil 20 und dem Empfangsteil 21 jeweils die gesamte Öffnung des Objektivs 3 zugeordnet.

Die vorgestellte Konstruktion benötigt nur eine einzige zusätzliche Öffnung, die Öffnung 16, im Fernrohrgehäuse 2. Die Öffnung 16 kann durch gasdichtes Einkleben der Linse 18 dauerhaft abgedichtet werden, so daß der beschlagsempfindliche Innenraum des Zielfernrohres 1 gegen Feuchtigkeitseintritt geschützt ist. Auch im Falle einer Reparatur der Elektronik bleibt das Zielfernrohr abgedichtet, da lediglich das Meßgehäuse 13 entfernt werden muß.

Als optoelektronischer Entfernungsmesser eignet sich insbesondere ein Diodenlaser-Entfernungsmesser nach dem Impulslaufzeit-Verfahren. Alternativ kann jede andere in der Technik bekannte optoelektronische Entfernungsmeßvorrichtung verwendet werden.

## Patentansprüche

1. Kombinierte Fernrohr- und Entfernungsmeßvorrichtung, umfassend
ein Zielfernrohr (1) mit einem Fernrohrgehäuse (2), dessen eines Ende ein Objektiv (3) und dessen anderes Ende ein Okular (4) aufnimmt und das zwischen diesen einen Strahlengang (5) definiert,
einen optoelektronischen Entfernungsmesser (12) mit einer Sendeempfangsoptik (14) für optische Meßstrahlen (15) und einer Auswerteelektronik (24) zur Laufzeitmessung zwischen einem gesendeten und einem empfangenen Maßstrahl und zur darausfolgenden Entfernungsbestimmung, und
einen Strahlteiler (17) im Strahlengang (5) des Fernrohrgehäuses (2), welcher Meßstrahlen in den zum Objektiv (3) verlaufenden Teil des Strahlenganges (5) ein- bzw. auskoppelt,
wobei das Fernrohrgehäuse (2) mit einer Öffnung (16) in einer Seitenwand versehen ist, und
der Entfernungsmesser (12) in einem gesonderten, an die genannte Seitenwand anbaubaren Meßgehäuse (13) enthalten ist, wobei die Sendeempfangsoptik (14) auf die genannte Öffnung (16) gerichtet ist, **dadurch gekennzeichnet,**
**daß** das Fernrohrgehäuse in an sich bekannter Weise ein einstellbar beweglich gelagertes Innenrohr (17) aufweist, welches vom Strahlengang (5) durchsetzt ist und eine Zielmarke (10) darbietet,
**daß** der Strahlteiler (17) vom Innenrohr (7) getragen ist, und
**daß** der zwischen Strahlteiler (17) und Sendeempfangsoptik (14) verlaufende Abschnitt der Meßstrahlen (15) zumindest über einen Teil (15') dieses Abschnittes afokal ist.

2. Vorrichtung nach Anspruch 1, **dadurch gekennzeichnet, daß** das Fernrohrgehäuse (13) einerseits und das Innenrohr (7) oder der Strahlteiler (17) anderseits je eine Linse (18, 19) oder Linsengruppe abstützen, welche zwischeneinander den genannten afokalen Teil (15') bilden.

3. Vorrichtung nach Anspruch 1 oder 2, **dadurch gekennzeichnet, daß** die Öffnung (16) mit einer für Meßstrahlen (15) transparenten Abdeckung (18) dicht verschlossen ist.

4. Vorrichtung nach den Ansprüchen 2 und 3, **dadurch gekennzeichnet, daß** die Abdeckung (18) durch die vom Fernrohrgehäuse (2) abgestützte Linse (18) gebildet ist:

5. Vorrichtung nach den Ansprüchen 1 bis 4, **dadurch gekennzeichnet, daß** die Zielmarke (10) auf der dem Objektiv (3) zugewandten Seite des Strahlteilers (17), bevorzugt in Form einer Strichplatte (9), angeordnet ist.

6. Vorrichtung nach einem der Ansprüche 1 bis 5, **dadurch gekennzeichnet, daß** die Sendeempfangsoptik (14) voneinander örtlich beabstandete Sende- und Empfangsteile (20, 21) aufweist, denen ein Strahlsplitter (22, 23) zur entsprechenden Aufteilung von gesendeten und empfangenen Meßstrahlen (15) vorgeordnet ist.

7. Vorrichtung nach Anspruch 6, **dadurch gekennzeichnet, daß** der Strahlsplitter (22, 23) durch zwei voneinander abgewandte, mittig auf die genannte Öffnung (16) ausgerichtete 90°-Umlenkprismen gebildet ist.

8. Vorrichtung nach Anspruch 6, **dadurch gekennzeichnet, daß** der Strahlsplitter ein physikalischer Strahlleistungsteiler, z.B. 50%/50%-Teiler, polarisierender Teiler usw. ist.

9. Vorrichtung nach einem der Ansprüche 6 bis 8, **dadurch gekennzeichnet, daß** der Sende- und der Empfangsteil (20, 21) auf einer sich parallel zur Achse des Fernrohrgehäuses (2) erstreckenden Schaltkarte (24) in Achsenrichtung voneinander beabstandet angeordnet sind.

10. Zielfernrohr (1) für den Anbau eines optoelektronischen Entfernungsmessers, umfassend
ein Fernrohrgehäuse (2), dessen eines Ende ein Objektiv (3) und dessen anderes Ende ein Okular (4) aufnimmt und das zwischen diesen einen Strahlengang (5) definiert,
einen Strahlteiler (17) im Strahlengang (5) des Fernrohrgehäuses (2), welcher Meßstrahlen für den optoelektronischen Entfernungsmesser in den zum Objektiv (3) verlaufenden Teil des Strahlenganges (5) ein- bzw. auskoppelt,
wobei das Fernrohrgehäuse (2) mit einer Öffnung (16) in einer Seitenwand für den Durchtritt dieser Meßstrahlen versehen ist,
**dadurch gekennzeichnet,**
**daß** das Fernrohrgehäuse (2) in an sich bekannter Weise ein einstellbar beweglich gelagertes Innenrohr aufweist, welches vom Strahlengang (5) durchsetzt ist und eine Zielmarke (10) darbietet,
**daß** der Strahlteiler (17) vom Innenrohr (7) getragen ist, und
**daß** das Fernrohrgehäuse (13) einerseits und das Innenrohr (7) oder der Strahlteiler (17) anderseits je eine Linse (18, 19) oder Linsengruppe abstützen, welche zwischeneinander einen afokalen Strahlengang (15') der Meßstrahlen gewährleisten.

11. Zielfernrohr nach Anspruch 10, **dadurch gekennzeichnet, daß** die Öffnung (16) mit einer für Meßstrahlen (15) transparenten Abdeckung (18) dicht verschlossen ist.

12. Zielfernrohr nach Anspruch 11, **dadurch gekennzeichnet, daß** die Abdeckung (18) durch die vom Fernrohrgehäuse (2) abgestützte Linse (18) gebildet ist.

## Claims

1. Combination telescope and range finding apparatus, comprising:
a telescoping sight (1) having a telescope housing (2) one end of which receives an objective lens (3) and the other end of which receives an eyepiece (4) and which defines a beam path (5) therebetween,
an opto-electronic range finder (12) having emitter-receiver optics (14) for optical measuring beams (15) and evaluation electronics (24) for timing the interval between an emitted and a received measuring beam and for determining the distance on the basis thereof, and
a beam splitter (17) in the beam path (5) of the telescope housing (2) which couples or decouples measuring beams into and out of the portion of the beam path (5) extending toward the objective lens (3),
whereby the telescope housing (2) is provided with an opening (16) in a side wall, and
the range finder (12) is contained in a separate measuring housing (13) attachable to said side wall, whereby the emitter-receiver optics (14) are directed to said opening (16), **characterized in that**
the telescope housing is provided in a known manner with an internal tube (17) mounted for adjustment movements, penetrated by the beam path (5) and presenting a target mark (10),
the beam splitter (17) is supported by the internal tube (7), and
the section of the measuring beams (15) extending between the beam splitter (17) and emitter-receiver optics (14) is afocal in at least a portion (15') of this section.

2. Apparatus according to claim 1, **characterized in that** the telescope housing (13) on the one hand and the internal tube (7) or beam splitter (17) on the other hand each support a lens (18, 19) or group of lenses which between them form said afocal portion (15').

3. Apparatus according to claim 1 or 2, **characterized in that** the opening (16) is hermetically sealed by a cover (18) transparent to the measuring beams (15).

4. Apparatus according to claims 2 and 3, **characterized in that** the cover (18) is constituted by the lens (18) supported by the telescope housing (2).

5. Apparatus according to claims 1 to 4, **characterized in that** the target mark (10) is arranged, preferably as a hair-line graticule (9), at the side of the beam splitter (17) facing the objective lens (3).

6. Apparatus according to one of claims 1 to 5, **characterized in that** the emitter-receiver optics (14) is provided with spatially separated emitter and receiver components (20, 21) with a beam splitter (22, 23) in front of them for correspondingly splitting emitted and received measuring beams (15).

7. Apparatus according to claim 6, **characterized in that** the beam splitter (22, 23) is formed by two opposite 90° deflecting prisms arranged centrally with respect to said opening (16).

8. Apparatus according to claim 6, **characterized in that** the beam splitter is a physical beam power splitter, e.g. a 50%/50% splitter, a polarizing splitter, etc.

9. Apparatus according to one of claims 6 to 8, **characterized in that** the emitter and receiver components (20, 21) are arranged axially spaced from each other on a circuit board (24) extending parallel to the axis of the telescope housing (2).

10. Telescoping sight (1) for attachment of an opto-electronic range finder, comprising:
a telescope housing (2) one end of which supports an objective lens (3) and the other end of which supports an eyepiece (4) and which defines a beam path (5) therebetween,
a beam splitter (17) in the beam path (5) of the telescope housing (2) which couples or decouples measuring beams for the opto-electronic range finder into and out of the part of the beam path (5) extending to the objective lens (3),
whereby the telescope housing (2) is provided with an opening (16) in a side wall for passage of these measuring beams,
**characterized in that**
the telescope housing (2) in a known manner is provided with an internal tube, which is traversed by the beam path (5) and presents a target mark (10),
the beam splitter (17) is supported by the internal tube (7), and
the telescope housing (13) on the one hand and the internal tube (7) or beam splitter (17) on the other hand each support a lens (18, 19) or group of lenses which between them insure an afocal beam path (15') of the measuring beams.

11. Telescoping sight according to claim 10, **characterized in that** the opening (16) is hermetically sealed by a cover (18) transparent to measuring beams (15).

12. Telescoping sight according to claim 11, **characterized in that** the cover (18) is constituted by the lens (18) supported by the telescope housing (2).

## Revendications

1. Appareil combinant une lunette et un télémètre, comprenant
une lunette de visée (1) avec un boîtier (2) de lunette dont une extrémité accueille un objectif (3) et dont l'autre extrémité accueille un oculaire (4) et qui définit entre ceux-ci un trajet des rayons (5),
un télémètre optoélectronique (12) avec une optique d'émission et de réception (14) pour des rayons de mesure optique (15) et une électronique d'évaluation (24) pour mesurer le temps écoulé entre un rayon de mesure envoyé et un rayon de mesure reçu et déterminer ainsi la distance, et
un fractionneur de rayons (17) sur le trajet des rayons (5) du boîtier (2) de lunette qui accouple ou découple les rayons de mesure dans la partie du trajet des rayons (5) s'étendant en direction de l'objectif (3),
dans lequel le boîtier (2) de lunette est pourvu d'une ouverture (16) dans une paroi latérale, et
le télémètre (12) est contenu dans un boîtier de mesure (13) spécial applicable sur ladite paroi latérale, l'optique d'émission et de réception (14) étant orientée vers ladite ouverture (16),
**caractérisé**
**en ce que** le boîtier de lunette présente de manière connue en soi un tube intérieur (17) placé de manière mobile et réglable, lequel est traversé par le trajet des rayons (5) et offre un repère de visée (10),
**en ce que** le fractionneur de rayons (17) est supporté par le tube intérieur (7), et
**en ce que** la section des rayons de mesure (15) s'étendant entre le fractionneur de rayons (17) et l'optique d'émission et de réception (14) est afocale au moins sur une partie (15') de cette section.

2. Appareil selon la revendication 1, **caractérisé en ce que** le boîtier de lunette (13) d'une part et le tube intérieur (7) ou le fractionneur de rayons (17) d'autre part supportent chacun une lentille (18, 19) ou un groupe de lentilles qui forment entre elles ladite partie afocale (15').

3. Appareil selon la revendication 1 ou 2, **caractérisé en ce que** l'ouverture (16) est fermée hermétiquement par un couvercle (18) transparent pour les rayons de mesure (15).

4. Appareil selon les revendications 2 et 3, **caractérisé en ce que** le couvercle (18) est formé par la lentille (18) supportée par le boîtier (2) de lunette.

5. Appareil selon les revendications 1 à 4, **caractérisé en ce que** le repère de visée (10) est disposé sur le côté du fractionneur de rayons (17) orienté vers l'objectif (3), de préférence sous la forme d'un réticule (9).

6. Appareil selon les revendications 1 à 5, **caractérisé en ce que** l'optique d'émission et de réception (14) présente des parties d'émission et de réception (20, 21) écartées localement l'une de l'autre devant lesquelles est placé un diviseur de rayons (22, 23) pour la séparation correspondante des rayons de mesure émis et reçus.

7. Appareil selon la revendication 6, **caractérisé en ce que** le diviseur de rayons (22, 23) est formé par deux prismes de détection orientés à 90°, détournés l'un de l'autre, au centre de ladite ouverture (16).

8. Appareil selon la revendication 6, **caractérisé en ce que** le diviseur de rayons est un fractionneur physique de la puissance des rayons, p. ex. un diviseur 50 % /50 %, un diviseur polarisant.

9. Appareil selon une des revendications 6 à 8, **caractérisé en ce que** la partie d'émission et la partie de réception (20, 21) sont disposées à distance l'une de l'autre dans le sens de l'axe sur une carte de circuits imprimés (24) s'étendant parallèlement à l'axe du boîtier (2) de lunette.

10. Lunette de visée (1) pour le montage en saillie d'un télémètre optoélectronique, comprenant
un boîtier (2) de lunette dont une extrémité accueille un objectif (3) et dont l'autre extrémité accueille un oculaire (4) et qui définit entre ceux-ci un trajet des rayons (5),
un fractionneur de rayons (17) sur le trajet des rayons (5) du boîtier (2) de lunette qui accouple ou découple les rayons de mesure pour le télémètre optoélectronique dans la partie du trajet des rayons (5) s'étendant en direction de l'objectif (3),
dans lequel le boîtier (2) de lunette est pourvu d'une ouverture (16) dans une paroi latérale pour la pénétration de ces rayons de mesure,
**caractérisée**
**en ce que** le boîtier (2) de lunette présente de manière connue en soi un tube intérieur placé de manière mobile et réglable, lequel est traversé par le trajet des rayons (5) et offre un repère de visée (10),
**en ce que** le fractionneur de rayons (17) est supporté par le tube intérieur (7), et
**en ce que** le boîtier de lunette (13) d'une part et le tube intérieur (7) ou le fractionneur de rayons (17) d'autre part supportent chacun une lentille (18, 19) ou un groupe de lentilles qui garantissent entre elles un trajet des rayons afocal (15') des rayons de mesure.

11. Lunette de visée selon la revendication 10, **caractérisée en ce que** l'ouverture (16) est fermée hermétiquement par un couvercle (18) transparent pour les rayons de mesure (15).

12. Lunette de visée selon la revendication 11, **caractérisée en ce que** le couvercle (18) est formé par la lentille (18) supportée par le boîtier (2) de lunette.
